# EUROPEAN PATENT APPLICATION

(11) **EP 2 302 166 A2**
(43) Date of publication of application: **30.03.2011**
(21) Application number: 10173693.2
(22) Date of filing: 23.08.2010
(51) Int. Cl.: F01D 5/14, F01D 5/28

(54) **A metal-composite hybrid component**

(30) Priority: 24.09.2009 GB 0916758
(71) Applicant: Rolls-Royce plc, London SW1E 6AT (GB)
(72) Inventor: Gerlach, Robert, 99734, Nordhausen (DE)
(74) Representative: Gee, Philip David

(57) **Abstract**

A method for making a hybrid component comprises the steps of placing a lower shell in the lower half of an RTM form tool; placing layers of composite fabric on top of the lower shell to define a composite core; placing an upper shell on top of the layers; closing the RTM form tool; infiltrating the composite fabric with resin; curing the resin. At least one of the lower and upper shells comprises pins projecting generally perpendicularly to its surface, and the pins penetrate the composite fabric.

## Description

This invention relates to hybrid components (that is, those comprising both metal and fibre-reinforced composite), and is particularly applicable to hybrid blades for gas turbine engines in which a core made of composite material is surrounded by an outer shell made of metal.

It is known to make blades, particularly fan blades for gas turbine engines, with a hybrid construction. In one known type of hybrid blade, a composite core (consisting of two-dimensional (2D) or three-dimensional (3D) fibre-reinforced composite material) has a sheet metal protective shell adhesively bonded to it. The shell may cover the whole fan blade (including or excluding the root part) or it may cover only part of it (for example, the leading or trailing edges).

Such a hybrid construction allows the advantages of composite material construction (for example, superior fatigue resistance, high specific strength and the ability to tailor mechanical properties in different directions to match the demands on the blade in use) to be utilised, while the metal shell ameliorates the known disadvantages of composite materials (notably, that their resistance to erosion and impact damage is inferior to that of metal blades).

There are, however, limitations and disadvantages associated with known hybrid blades. For example:
the adhesive bond between the metal shell and composite core is a weak spot and is prone to debonding under impact;
the manufacturing process of such a blade must comprise at least two distinct steps (infiltrating the composite core and adhesively bonding the metal shell) and is therefore relatively complex;
the composite core is prone to delamination unless 3D composite, rather than 2D composite, is used. However, while 3D composites offer better through-thickness properties than 2D composites, their in-plane properties are inferior;
at present, 3D composites are less well understood than 2D composites, and the additional development work needed to use 3D composites in a particular application may outweigh any economic advantage over 2D composites.

A first aspect of the invention provides a method for making a hybrid component as set out in claim 1. A second aspect of the invention provides a hybrid component as set out in claim 9.

To help understanding of the invention and how it may be put into effect, an embodiment thereof will now be described, by way of example, with reference to the accompanying drawings in which:
Figure 1 is a schematic perspective view illustrating a method according to the invention; and
Figure 2 is a cross-sectional view on the line A-A in Figure 1.

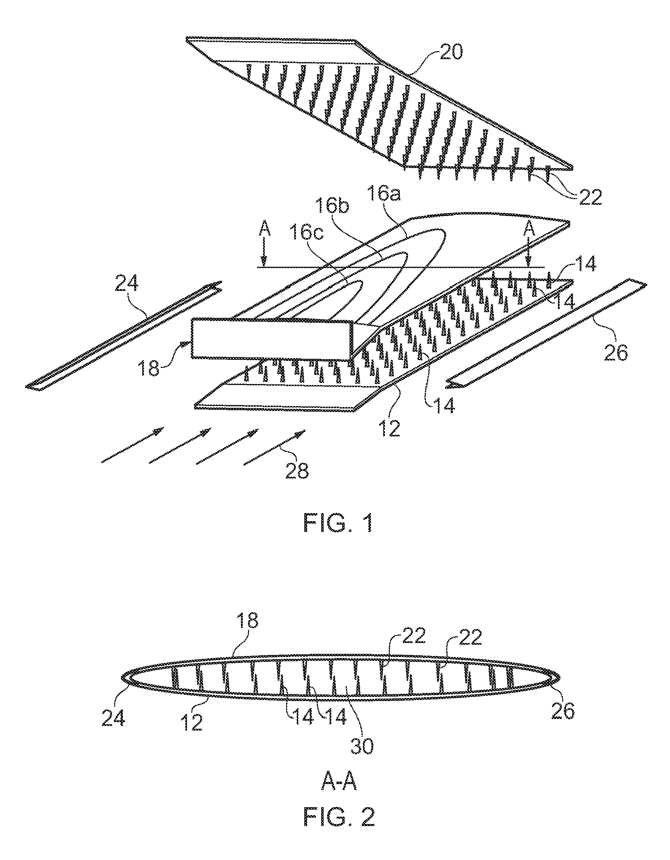

Figure 1 illustrates the manufacture of a fan blade for a gas turbine engine in accordance with the invention.

The first step is to place a lower shell 12 into the lower half of a resin transfer moulding (RTM) form tool (not shown) of known type. The lower shell 12 is made of titanium alloy. The lower shell incorporates regularly-spaced metal pins 14, which extend perpendicularly to its surface. The pins are about 1 mm in diameter at the root, and each tapers to a relatively sharp point.

Next, a number of layers 16 of unidirectional composite fabric are successively placed on top of the lower shell, with the pins penetrating the fabric. The layers of fabric may be cut to shape, as in 16b and 16c, so that the layers will together define a composite core of the correct shape to form the fan blade. The layers of fabric also define a root portion 18 of the fan blade.

Next, an upper shell 20 is placed on top of the layers of fabric. The upper shell, like the lower shell, is made of titanium alloy and has regularly-spaced metal pins 22 extending perpendicularly to its surface. The pins penetrate the layers of fabric defining the core. Next, a leading edge cover 24 and a trailing edge cover 26 are fitted so as to overlap the edges of the upper and lower shells. In this way, the infiltrating resin (described below) will also provide the adhesive bond between the covers 24, 26 and the shells 12,20.

The upper half of the RTM form tool (not shown) is then brought down to close and seal the RTM form. The form is next infiltrated with resin according to known methods, the resin being introduced into the form via the root portion 18, as shown by the arrows 28.

Following infiltration, curing and potentially tempering according to the resin specifications, the product of the method is a fan blade as shown in cross-section in Figure 2. Features are identified with the same reference numbers as in Figure 1.

The pins 14, 22 of the respective shells 12, 20 extend through the core 30 of the formed fan blade. This provides a better mechanical bond between the shells and the core than in prior arrangements, reducing the risk of debonding of the structure in service, for example under impact loading. Furthermore, the pins provide the 2D composite core with a third-dimensional reinforcement comparable to Z-pinning; this provides many of the advantages of a 3D composite core while permitting the use of the simpler, and currently more economical, 2D composite.

The invention thus provides an improved method of making a turbomachine blade, the method resulting in an improved product. The method allows the entire blade to be produced in a single operation, in contrast to known methods. Also, it permits the core to be made from unidirectional composite fabric, yet the resulting blade has many of the advantageous properties associated with 3D composite cores.

Because the metal pins extend through and engage with the composite core, the bonding of the shells is much better than in known hybrid blades and there is less risk of debonding in use.

It is known that conventional 3D reinforcement members (such as carbon fibre pins and 3D yarns) offer little resistance to mode II loading, because of their low mechanical properties perpendicular to their fibre direction. The reinforcement effect (especially in terms of dissipated energy) achievable with the metal pins is expected to be superior because of the isotropic nature of the metal pins and their relatively high strain to failure.

Because the metal pins are thin and pointed, the damage caused to the composite fabric by their penetration will be minimised. In addition, the use of unidirectional fabric keeps the advantage of a high (compared with 3D composites) fibre volume fraction for the in-plane directions.

It should be understood that the foregoing description is only illustrative of the invention, and various alternatives and modifications can be devised by those skilled in the art without departing from the invention.

Pins of other diameters, with or without taper, may be used. Alternatively, features having other shapes may be employed to engage with the core.

The pins may overlap in a central region of the composite core.

It is envisaged that the leading and trailing edge covers, instead of being fitted before the RTM form is closed, may instead be adhesively attached to the blade once it has been infiltrated and cured. This would, of course, require an additional production step, but it would offer the advantage that a different and potentially more suitable adhesive may be used to attach the metal leading and trailing edge covers.

Furthermore, it will be appreciated that the invention is not limited to the manufacture of turbomachine blades, but can be applied to the manufacture of any hybrid component, and especially to those where resistance to delamination is important.

## Claims

1. A method for making a hybrid component, comprising the steps of:
a) placing a first shell (12) in one half of an RTM form tool;
b) placing a composite core on the first shell;
c) placing a second shell (20) on the composite core;
d) closing the RTM form tool;
e) infiltrating the composite core with resin;
f) curing the resin;
the method **characterised in that** at least one of the first and second shells comprises projecting features (14, 22) that penetrate the composite core in any or all of steps b), c) and d).

2. The method of claim 1, in which the composite core comprises layers (16) of composite fabric.

3. The method of claim 1, in which both the first and second shells comprise projecting features that penetrate the composite core.

4. The method of any preceding claim, in which the projecting features are pins.

5. The method of any preceding claim, in which the projecting features taper in a direction away from their respective shell.

6. The method of any preceding claim, in which the component is a blade for a gas turbine engine.

7. The method of claim 6, in which leading (24) and trailing (26) edge covers are fitted to the shells following step c).

8. A hybrid component comprising a composite core at least partially enclosed by a first (12) and a second (20) metal shell, at least one of the first and second shells having projecting features (14, 22) penetrating the composite core.

9. The component of claim 8, in which both the first and second shells comprise projecting features penetrating the composite core.

10. The component of claim 8 or claim 9, in which the projecting features are pins.

11. The component of any of claims 8 to 10, in which the projecting features taper in a direction away from their respective shell.

12. The component of any of claims 8 to 11, in which the composite core comprises layers (16) of composite fabric.

13. The component of any of claims 8 to 12, in which the component is a blade for a gas turbine engine.
